# EUROPEAN PATENT APPLICATION

(11) **EP 2 026 222 A1**
(43) Date of publication of application: **18.02.2009**
(21) Application number: 08162041.1
(22) Date of filing: 07.08.2008
(51) Int. Cl.: G06F 17/30

(54) **Data and application model for configurable tracking and reporting system**

(30) Priority: 15.08.2007 US 956013 P
(71) Applicant: Cordis Corporation, Miami Lakes, Florida 33014 (US)
(72) Inventor: Alquier, Lori, Whitehouse Station, NJ 08889 (US); Maryanoff, Cynthia A., New Hope, PA 18938 (US); Veselov, Vladmir, Newtown, PA 18940 (US)
(74) Representative: Belcher, Simon James

(57) **Abstract**

A software application, which allows the addition, modification and deletion of database fields dynamically, may be utilized without having to modify the database structure, application code, or user interface elements. Essentially, additional attributes may be added, subtracted or changed by users without the assistance of a database administrator. In addition to being more efficient, the application also dynamically conforms to the needs of the users and the requirements of the project for which the data is being captured. As additional project needs are defined, the structure of the database can grow and contract dynamically in real time.

## Description

The present invention relates generally to computer systems, and, more particularly, to data modeling, interface design, and reporting.

Software systems typically consist of data records and executable code. Tracking and reporting systems typically use a database, executable code, and user interface for adding, editing, and deleting data records.

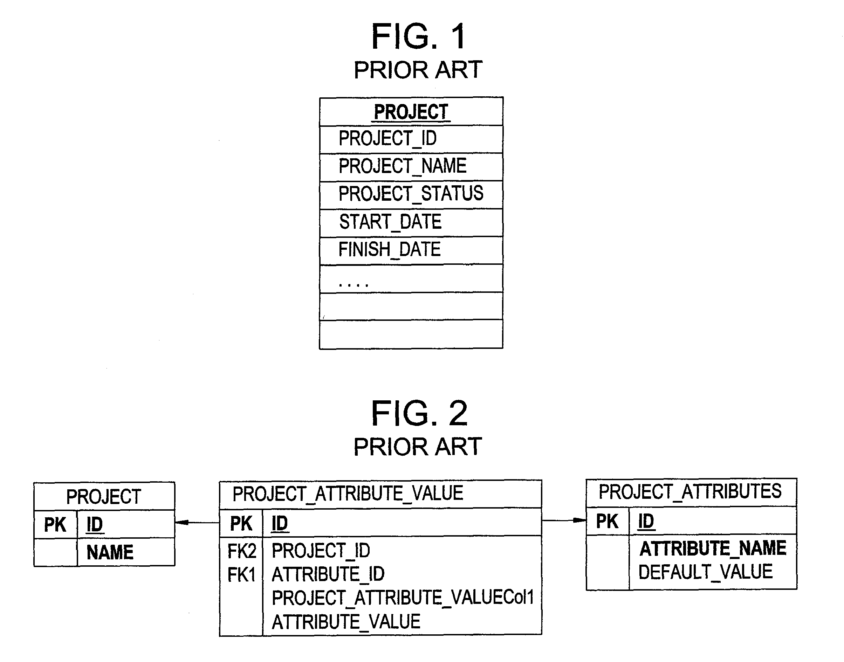

A typical database model for tracking project information, for example, has at least one table consisting of fields for storing the details about project (Figure 1). When there is a need to add or modify a new project attribute, this system model requires a modification of the table structure by adding or deleting fields at the database level. The normalized model is illustrated in Figure 2. This model enables the addition, modification and deletion of project attributes without having to modify the data model.

The application model describes screens, forms, and data flow in a system. For the described data models (Figure 1 and Figure 2), the application structure typically includes the following screens (or forms): Add Project, Edit Project, Delete Project, and Search/Browse Projects (Figure 3.), which provides needed functionality to perform data manipulation.

The requirements of the information structure depend on the system business goals and environment, which changes continuously. Adding new information requires modification of data model and application model. Therefore, there is a need to have a system, which can support changing business requirements without modification of data model or programming code.

The present invention overcomes the limitations associated with databases as briefly described above.

In accordance with one aspect, the present invention is directed to a method for structuring a database. The method comprising providing a template table, including list of unique templates for an informational entity, providing a template item table including definitions of template attributes, including level position in a hierarchical structure, default values, and set of possible values, providing a template item type, a template item option, and template item option value tables, including definitions and behavior items, having attributes of methods for presentation and validation, of template attributes, providing a code list and code list item tables for storing a list definitions for a template item attribute definition, providing an entity table for storing informational entities and association with their templates and providing an entity item table for storing content corresponding to created entities and defined template item attributes in the template items table.

The present invention describes a system design, including the database model, application model, and user interface design, which support flexibility and extendibility of the described system. The present invention provides the following advantages over traditional software system architecture:
allowing the addition and modification of the informational structure, including informational entities (like Project, Instrument, Contract) and their informational attributes dynamically through the user interface;
creating a hierarchical (tree like) model of informational entity attributes rather having a flat data structure;
supporting different types of informational entity attributes, including - text, numerical information, date / time, predefined value selection, and binary objects;
permitting the real-time configuration of the user interface to meet the needs of the business process;
allowing the creation of relational dependences between informational entities (like parent/child);
providing configurable and extendible reporting capabilities, including the generation of spreadsheets, slides, documents, and timeline charts;
allowing a configurable data entry interface;
allowing the importation of data from an existing data source (like Excel spreadsheets);
full text search;
logging of all modifications for the full audit trial support (which is required for regulated environment, such as Pharmaceutical and Medical Devices (21 CFR Part 11); and
including automated email (or other ways of communication) notifications for important business events (like contract renewal, task due dates, or instrument qualification expiration).

The present invention includes a data model, which includes tables for storing information about templates (describing the informational entities structure), entities, and attributes values, reports, and special tables for system access control, and other application settings.

The present invention includes a software system model, which works with the data model described in the present invention, without requiring modification for different business cases.

The present invention includes the design and method for generating a generic user interface and set of application settings that support a flexible and configurable system design, and may be used for various business purposes without requiring data model or application code modifications.

The present invention is directed to a generic database structure (or a method for structuring a database) allowing for:
storing different information (including textual, numeric, graphical, and binary) without having to modify tables and columns in the database;
configuring report generating methods and their structure;
configuring access restrictions for different users and user types to different types of content;
configuring generic application attributes, including titles, labels, and messages; and
configuring user interface screens for data modification.

The present invention is also directed to a method for design a generic application structure and generic user interface allowing configuration for different business needs, including project tracking, sample tracking, equipment inventory, contracts management, chemical inventory, etc.

The present invention is also directed to a method for generating a graphical user interface based on a definition of information entity type and attributes, and providing generic workflow for browsing, searching, and updating records.

The present invention is also directed to a method for generating a slide presentation based on automated estimation of a slide content size and supporting both textual, and graphical information.

Embodiments of the invention will now be described by way of example only with reference to the accompanying drawings, in which:
Figure 1 is a prior art database model for tracking information.
Figure 2 is a normalized version of the prior art database model illustrated in Figure 1.

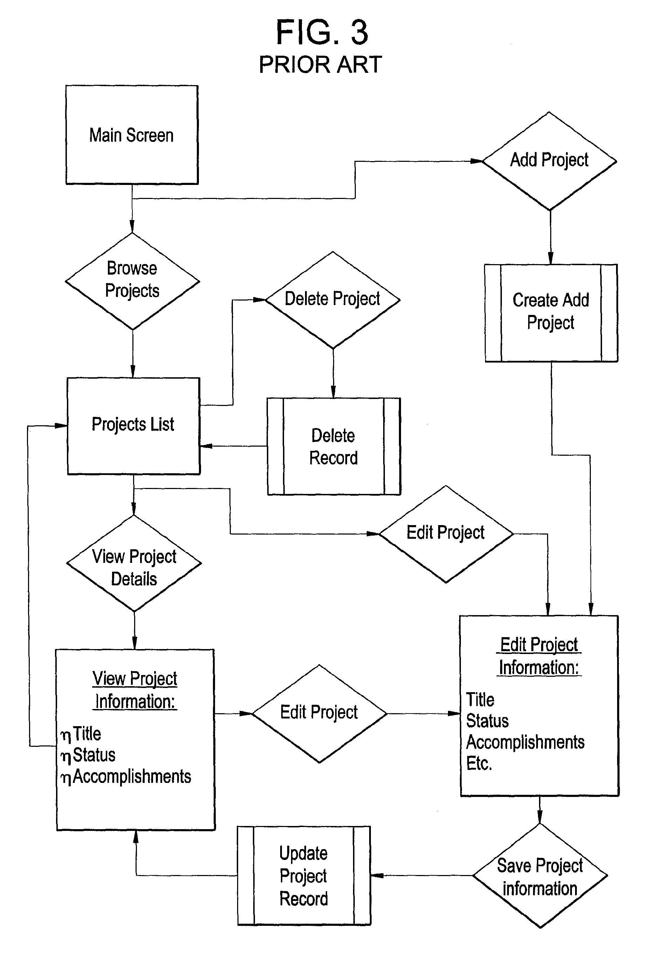

Figure 3 is a flow chart illustrating the data flow in the application structure of the models of Figures 1 and 2.

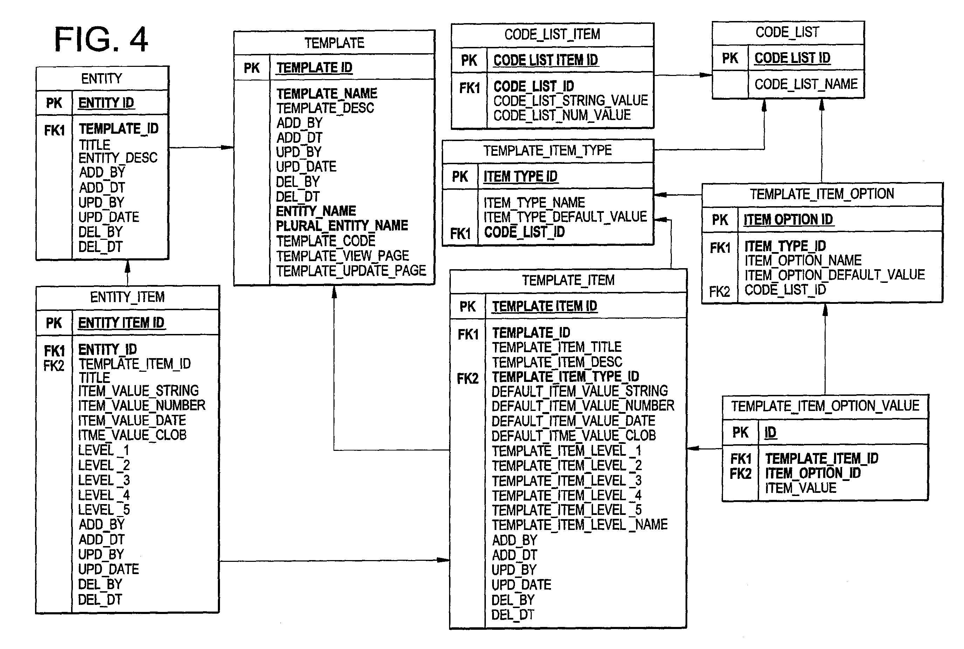

Figure 4 is an exemplary data model for storing information about the informational entity structure and values in accordance with the present invention.

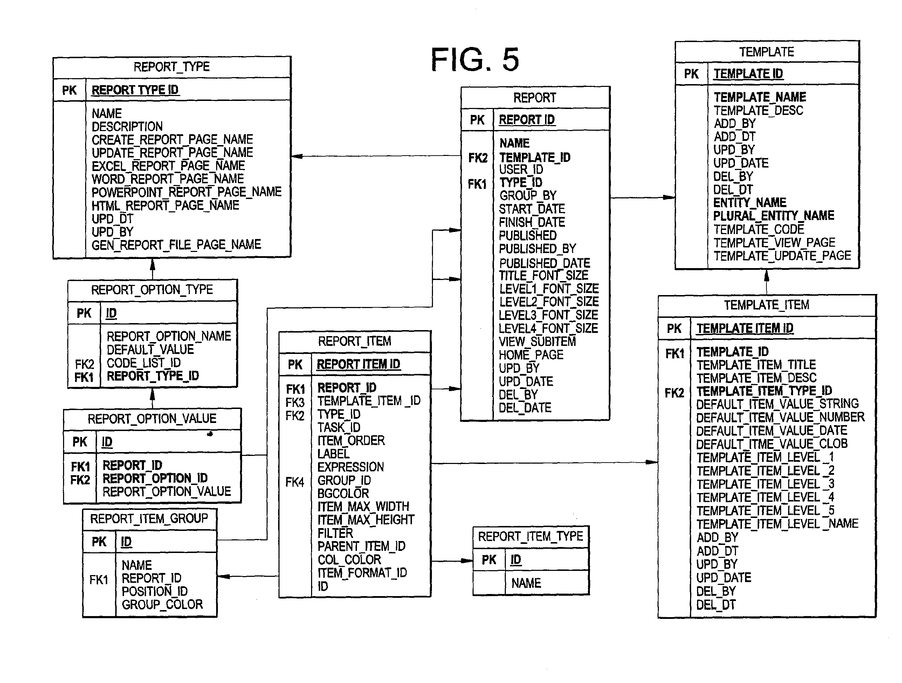

Figure 5 illustrates an exemplary data model for the Reports definition and the Reports configuration in accordance with the present invention.

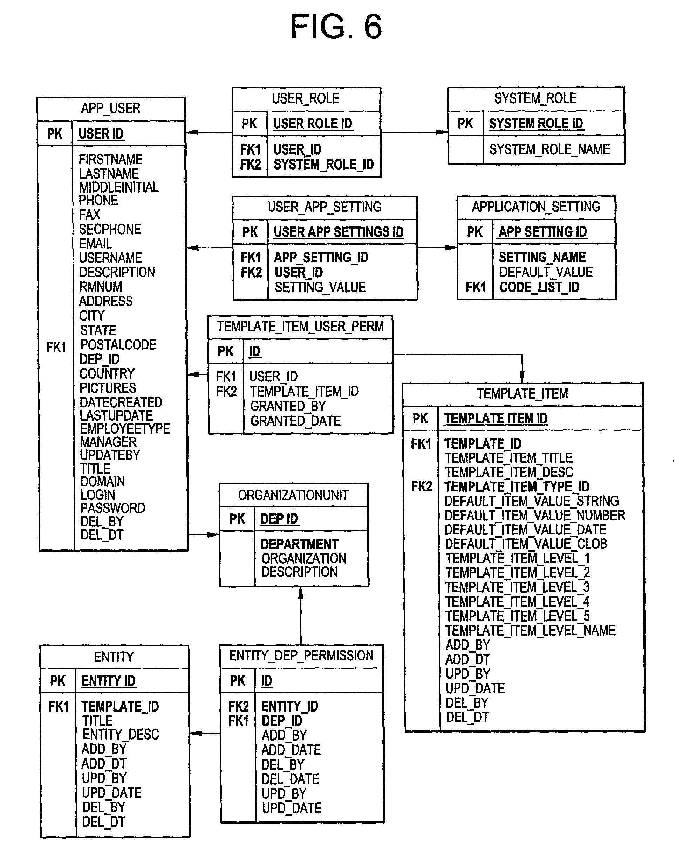

Figure 6 illustrates an exemplary data model for user accounts, organizational units, types of users and permissions in accordance with the present invention.

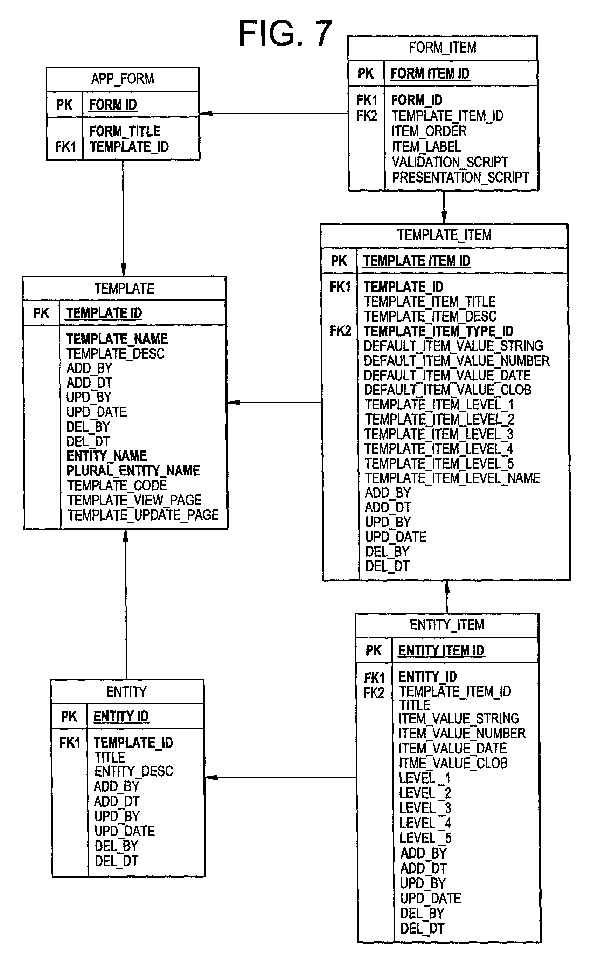

Figure 7 illustrates an exemplary data model for configurable data entry screens in accordance with the present invention.

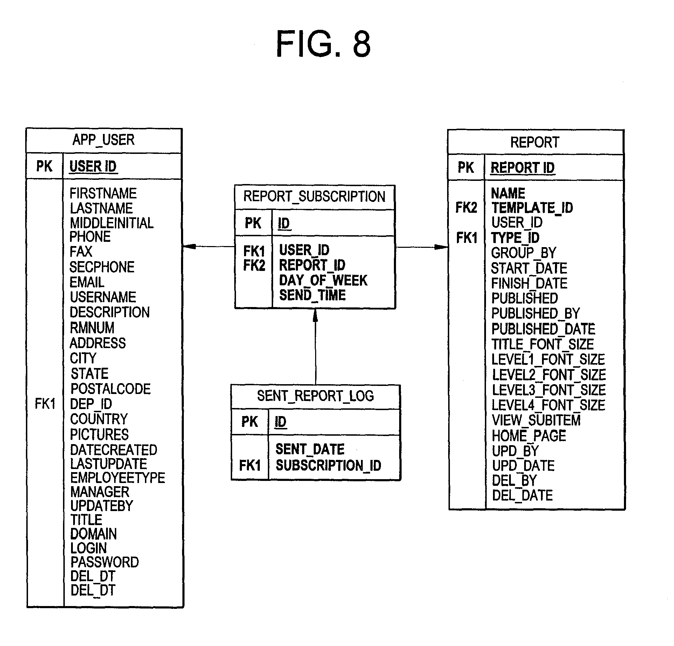

Figure 8 illustrates an exemplary data model for scheduled report notifications and logging in accordance with the present invention.

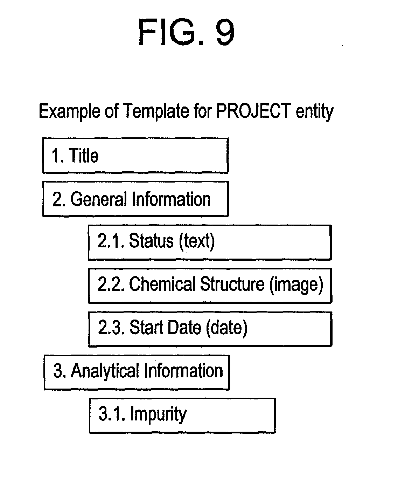

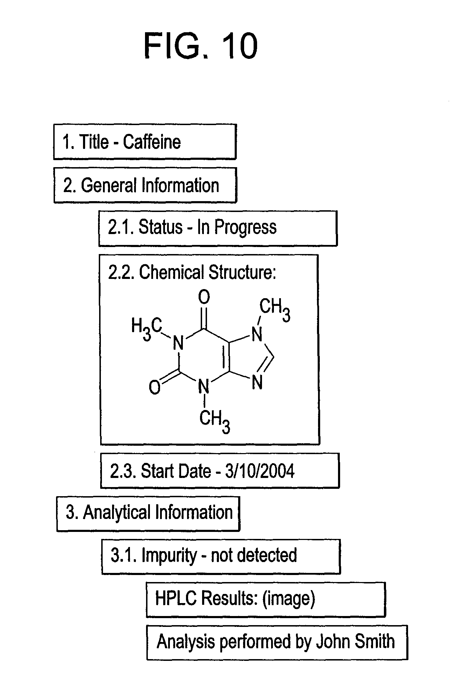

Figures 9 and 10 illustrate exemplary template structures in accordance with the present invention.

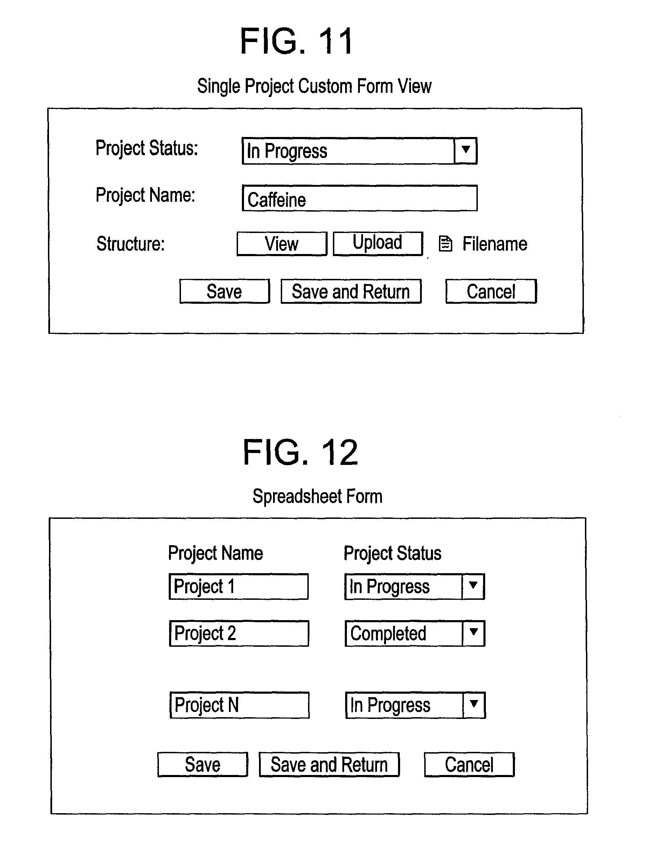

Figure 11 illustrates an exemplary custom form view in accordance with the present invention.
Figure 12 illustrates an exemplary spreadsheet form in accordance with the present invention.

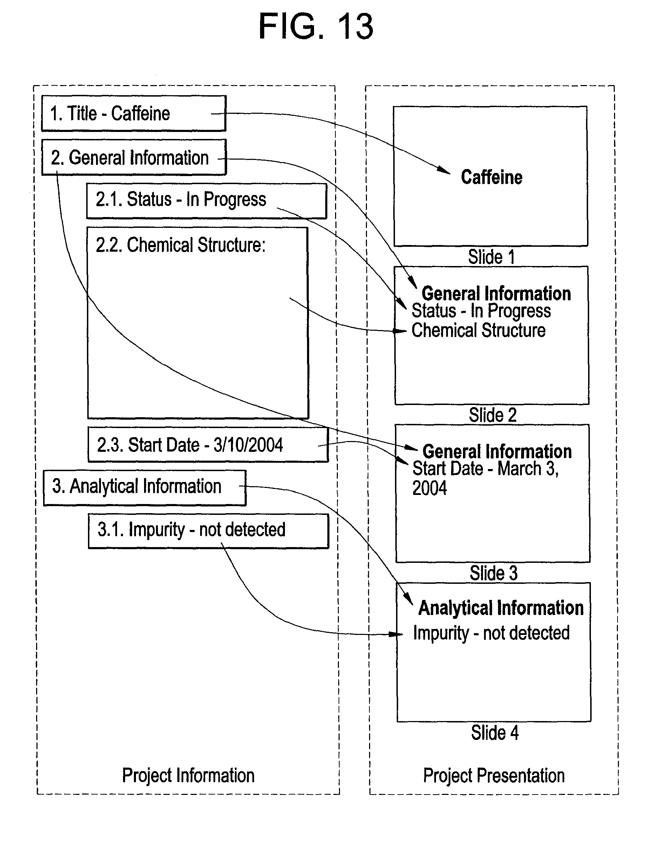

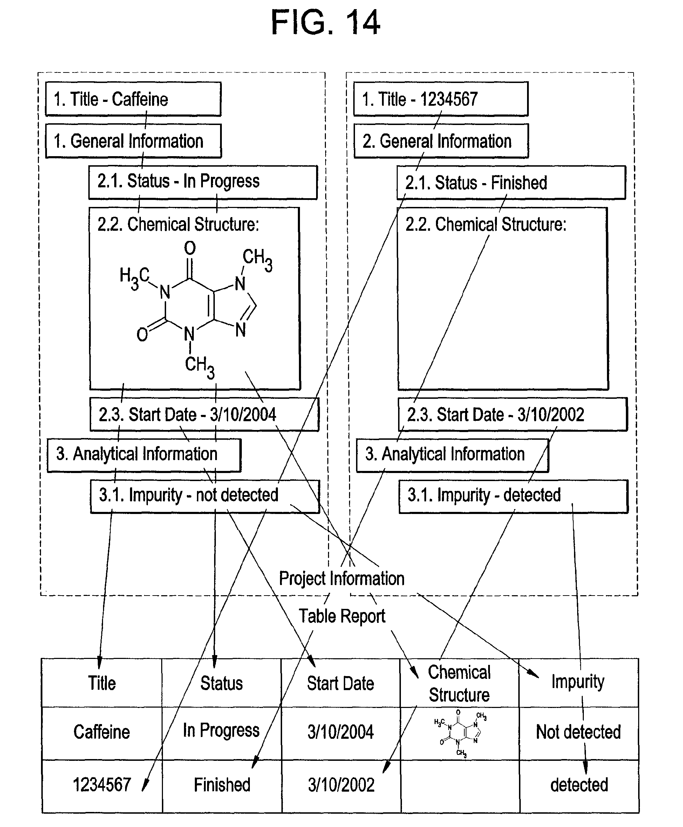

Figures 13 and 14 illustrate exemplary schemas of the data mapping for the slide and table reports in accordance with the present invention.

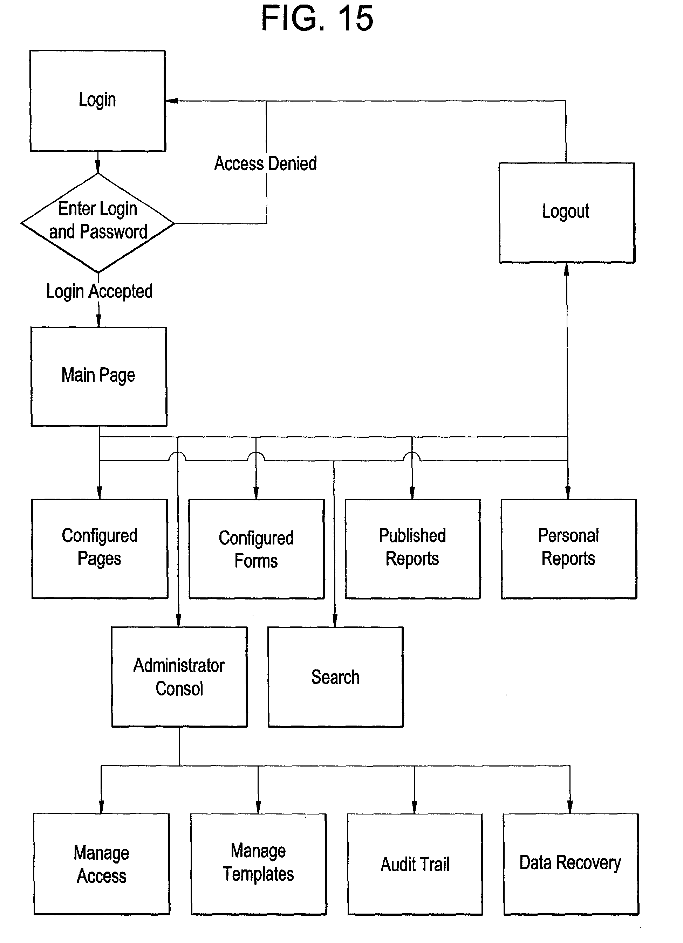

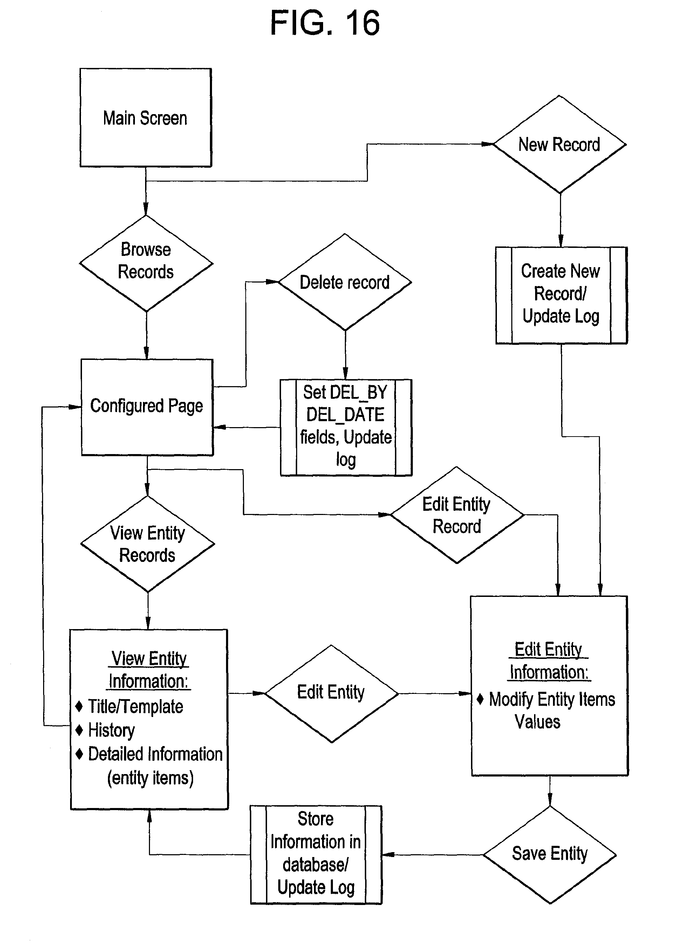

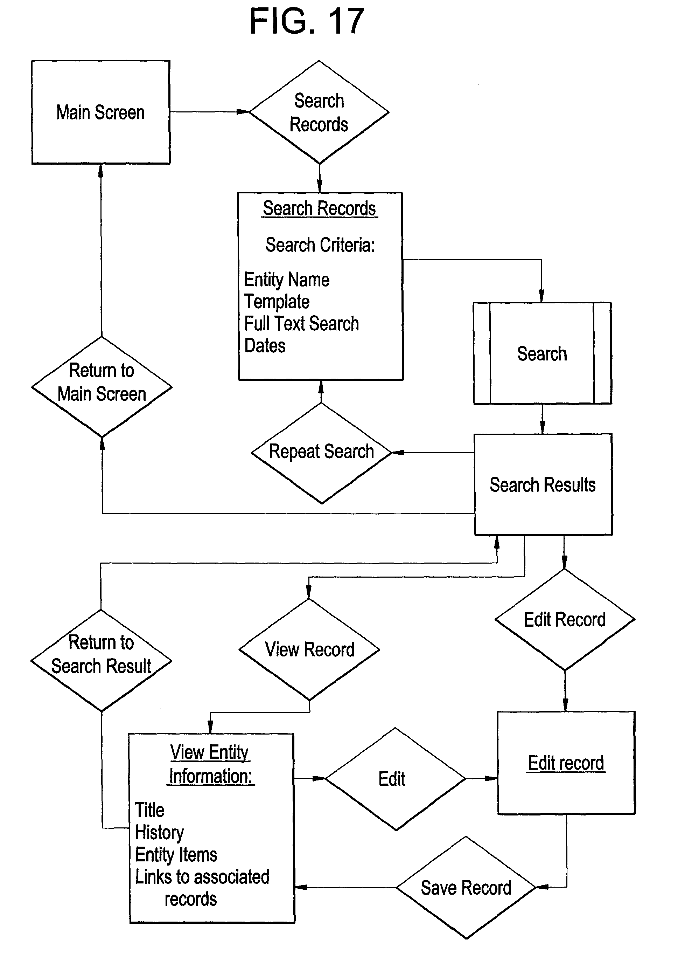

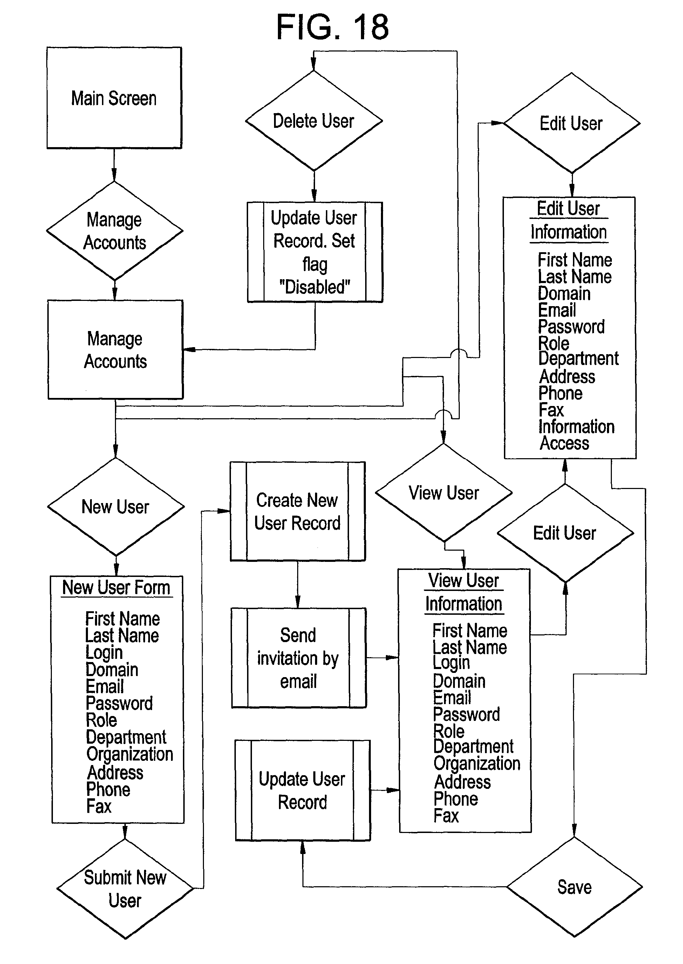

Figure 15 - 18 illustrate exemplary generic application models in accordance with the present invention.

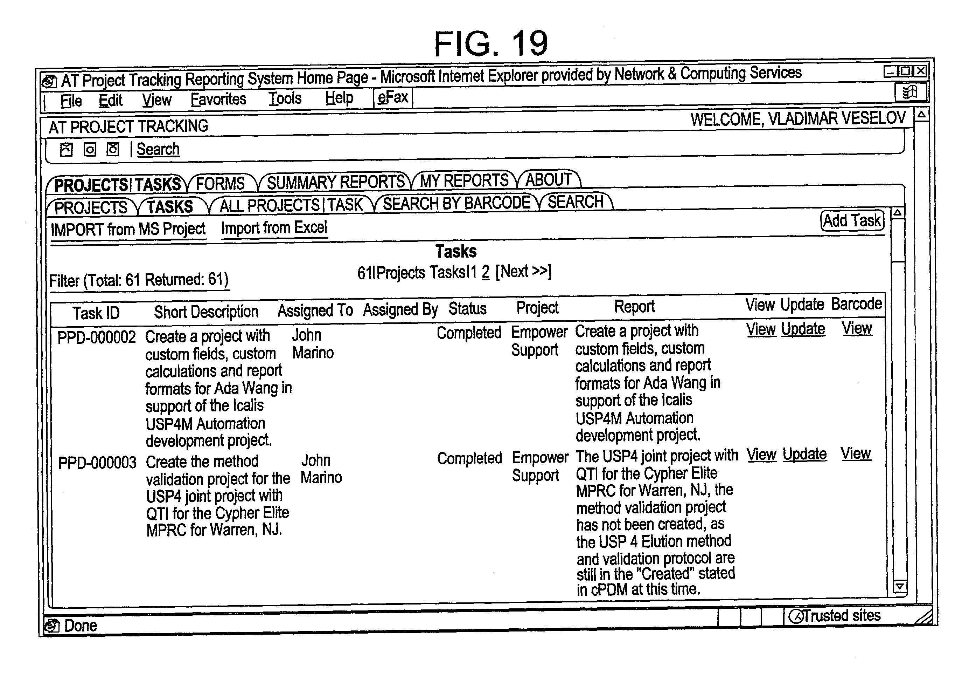

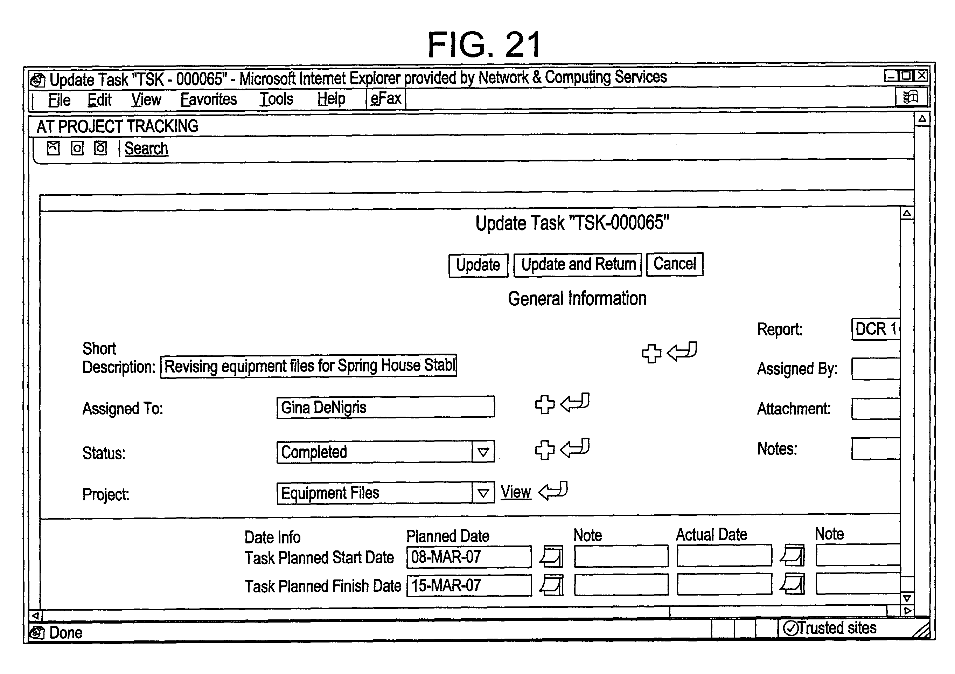

Figures 19 - 22 illustrate exemplary generic GUI designs in accordance with the present invention.

### Data Model

An exemplary data model in accordance with the present invention is illustrated in Figures 4-8.

An exemplary data model for storing information about the informational entity structure and values is illustrated in Figure 4.

The table TEMPLATE includes types of informational entities (for example, Project, Task, Contract). Each TEMPLATE has a title, description, and single and plural forms (used for generating messages and GUI elements). The table TEMPLATE_ITEM stores attributes of the templates. Each attribute has a title, description, type, and default value. The type of the template attribute and its options are defined by the tables entitled TEMPLATE_ITEM_TYPE, TEMPLATE_ITEM_OPTION, TEMPLATE_ITEM_OPTION, and TEMPLATE_ITEM_OPTION_VALUE. The tables CODE_LIST and CODE_LIST_ITEM includes lists of values, which define possible values for specific attributes. The fields TEMPLATE_ITEM_LEVEL_1, TEMPLATE_ITEM_LEVEL_2, TEMPLATE_ITEM_LEVEL_3, and TEMPLATE_ITEM_LEVEL_4 are used to specify the position of the attribute in a hierarchy.

The system may have the following types of template items:

| Template | Template | Template | Option Example | List |
|---|---|---|---|---|
| item type | Example | Item | | Example |
| | | Example | | |
| TEXT | Project | Project | HTML_CONTROL=TEXTAREA | |
| | | Goal | | |
| NUMBER | Request | Number | MAX_VALUE=20 | 0,26,8,10 |
| | | of tests | MIN_VALUE=0 | |
| DATE/ | Project | Started | DATE_FORMAT='YYYY-MM-DD' | |
| TIME | | Date | | |
| BINARY | Chemical | Chemical | ALLOWED_FORMATS | Tiff,jpeg, |
| OBJECT | Compound | Structure | | bmp |
| | | Image | | |
| TABLE | Project | List of | REFERENCE_TEMPLATE_NAME='TASK' | |
| | | tasks | REFERENCE_PARENT_ITEM_ID=1001 | |
| | | | | |
| PARENT | Task | Project | REFERENCE_TEMPLATE_NAME='PROJECT' | |
| ID | | ID | REFERENCE_CHILD_ITEM_ID-1010 | |
| CHOICE | Project | Project | HTML_CONTROL=DROPDOWN | Started, |
| | | Status | | Finished, |
| | | | | On hold |

When the Template information is specified, the information about entities for the specific types is stored in the tables ENTITY, ENTITY_ITEM. An example of the template structure and its corresponding entity is illustrated in Figures 9 and 10.

Entity Items may have sub items even if they are not specified in the TEMPLATE_ITEM table, see for example, Figure 10, Impurity information.

Figure 5 illustrates a data model for Reports definition and Reports configuration. The table REPORT_TYPE includes a list of possible reports (table report, slide presentation, schedule, timeline, custom type). Each type of report may have different options, such as 'Start Date', 'End Date', 'Group By', which are stored in the tables REPORT_OPTION_TYPE and REPORT_OPTION_VALUE. Report option values may be selected from a list of possible values. The list of values is stored in the tables CODE_LIST, CODE_LIST_ITEM (Figure 4).

Created reports are stored in the table REPORT. Reports are created by users and each user may publish reports for another user (the field PUBLISHED). Reports have a set of report items, which refer to specific template items and are stored in tables REPORT_ITEM, and TEMPLATE_ITEM. Report items may be configured in groups (see the table REPORT_ITEM_GROUP).

Figure 6 illustrates an exemplary data model for user accounts (APP_USER), organizational units ORGANIZATIONUNIT), types of users (SYSTEM_ROLE, USER_ROLE), and permissions (TEMPLATE_ITEM_USER_PERM, ENTITY_DEP_PERMISSION). The table APPLICATION_SETTINGS includes global application settings (like title, logo, font size, font style, etc.), and personalized settings.

Figure 7 illustrates an exemplary data model for configurable data entry screens (or web pages). Each screen for data entry includes selected template items and defines user interface elements, their layout, validation rules, and associated code for presentation (html script).

Figure 8 illustrates the data model for scheduled reports notifications, and logging.

### Data Entry Forms

When there are not any records in the table APP_FORM, the information is entered into a system by standard screens or web pages.

The forms module is used as a flexible interface for entering and updating the project information. Forms may be used for entering information about one project (Single Project Form) or multiple projects (Spreadsheet Form). The information about custom forms has the following attributes: form name, form type (single project or spreadsheet), and list of selected template items. When a form is present, users see the names of the template items and project information (values) for one or more projects. Depending on the type of the template item, the form applies an appropriate control: text input, drop down list, multiple select, date picker, file upload, etc. When the form is submitted, the system updates the corresponding fields in the database (PROJECT_ITEM table).

An example of a configured custom form is illustrated in Figure 11.

The single project form is a more convenient interface when the user needs to enter data in many fields (informational items) for one project. The spreadsheet form is more convenient when it is necessary to update a few attributes of many projects. An example of a spreadsheet custom form is illustrated in Figure 12. Forms for all users are created by a system administrator by default, however users may also create their own forms.

### Reports

The system has the following main report types, specified in the table REPORT_TYPE, (Figure 5):
table report
slide report (PowerPoint presentation)
timeline report
Gantt chart report
schedule (or calendar) report

Reports can be generated in the following formats:
Excel
HTML
Word
PowerPoint
XML
PDF

Each report has the following attributes (stored in the tables REPORT_OPTION_TYPE, REPORT_OPTION_VALUE, Figure 5):
report name;
group by column;
start and finish dates;
view sub items (yes or no); this option specifies if the report should include the whole hierarchy from the specified nodes, or the specified nodes only;
list of columns, which include project name, template items, start/finish dates, and calculated fields;
list of selected projects.

The schemas of the data mapping for the slide and table report are illustrated in Figures 13 and 14.

The Gantt chart report additionally has a list of tasks, each of which includes two dates (start and finish). The tasks are specified in an additional table, which is connected to the table with dates.

Presentations may be generated for the one or many projects. The system provides automated slides layout, i.e. it defines which project items may be put on the same slide. If there not enough space on the slide, then the rest of information is presented on the next slide.

### Generic Application Model

The generic application model is illustrated in Figures 15-18. The schemas show a generic screens (pages) flow, which, when combined with described previously data model, provide flexible functionality (add / update / search records) for most business applications.

### Generic Graphical User Interface

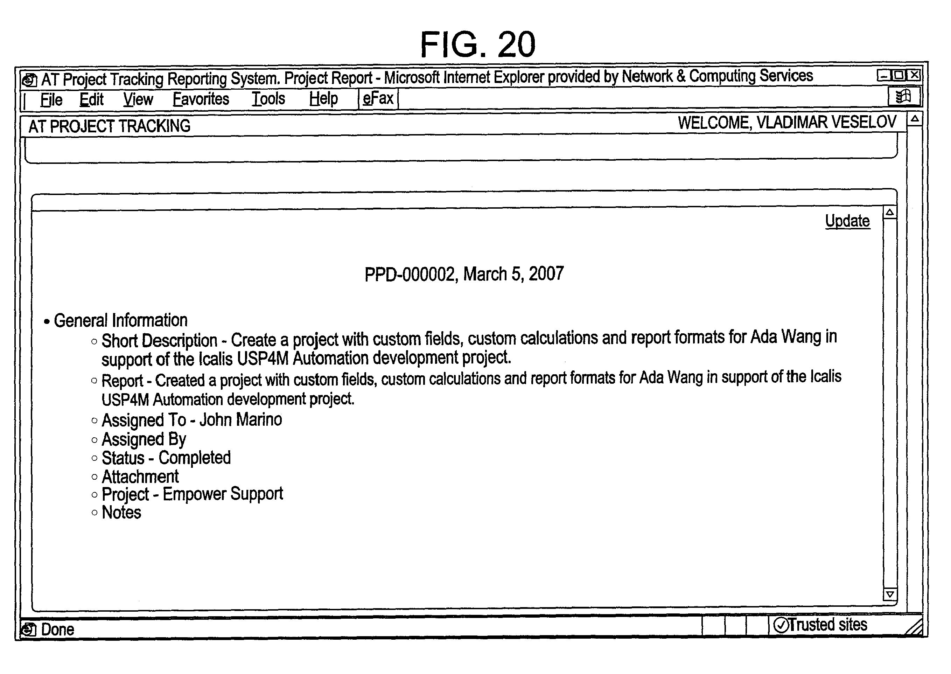

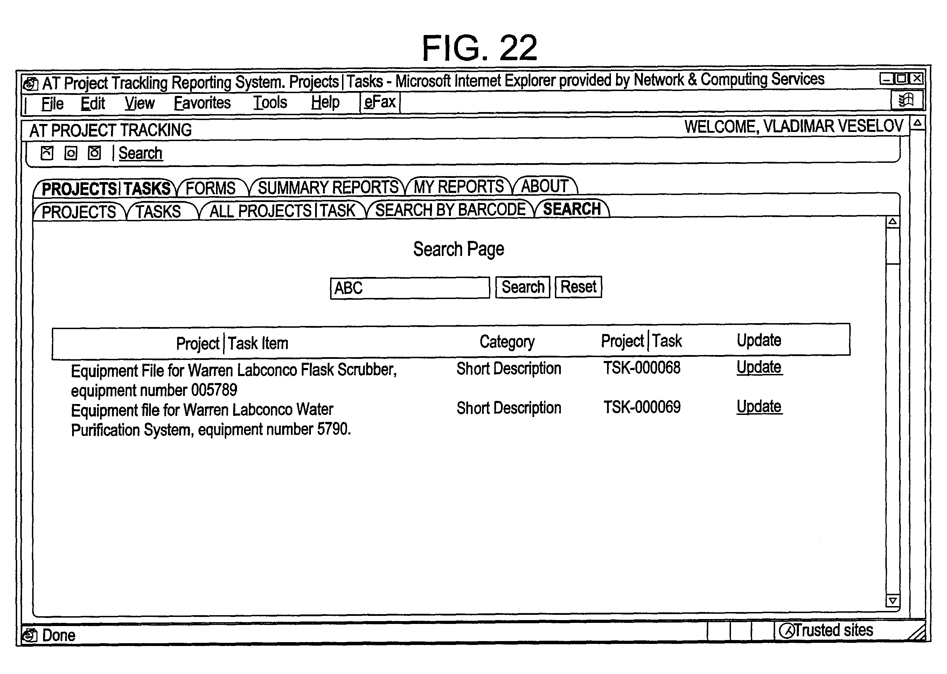

The generic GUI design is presented in Figures 19 - 22. The main page design includes the application title (retrieved from APPLICATION_SETTING table), toolbar, entity tab ("Project | Tasks"), customized entity sub tabs ("Projects", "Tasks"), and "Search Page". The main page has also links to the Forms, and Reports module. The sub tabs support browsing and searching of the entity records in the system. These tabs are not hard coded, and are generated from list of Reports (type - Table), which have the option - "Show on home page". If this option is specified, the correspondent entity attributes are retrieved from the database and presented on the configurable GUI page. For each record, there are links to "View", "Update" pages (Figures 20-21). Page "Search" (Figure 22) which support full text search through all entity records.

Although shown and described is what is believed to be the most practical and preferred embodiments, it is apparent that departures from specific designs and methods described and shown will suggest themselves to those skilled in the art and may be used without departing from the scope of the invention. The present invention is not restricted to the particular constructions described and illustrated, but should be constructed to cohere with all modifications that may fall within the scope for the appended claims.

## Claims

1. A method for structuring a database comprising:
providing a template table, including list of unique templates for an informational entity;
providing a template item table including definitions of template attributes, including level position in a hierarchical structure, default values, and set of possible values;
providing a template item type, a template item option, and template item option value tables, including definitions and behavior items, having attributes of methods for presentation and validation, of template attributes;
providing a code list and code list item tables for storing a list definitions for a template item attribute definition;
providing an entity table for storing informational entities and association with their templates; and
providing an entity item table for storing content corresponding to created entities and defined template item attributes in the template items table.

2. The method of claim 1, further comprising:
providing a report type table including report types definition and methods of generating;
providing a report option and report option value tables comprising definitions of report options;
providing a report table, including report names and association with template in the template table, and report type in the report type table;
providing a report item type table including information about report item types;
providing a report item table defining the content of the reports, referencing to a template item definition in the template item table; and
providing a report item group table for defining item groups in a report, which are used for structuring report information.

3. The method of claim 1, further comprising providing a forms and form items tables, including information about user screens for content modification, and referencing to the template and template items tables.

4. A method for designing a generic application structure and generic user interface comprising:
providing a database structure in accordance with claims 1, 2 and 3;
providing screens for creating and modifying templates and their definitions;
providing screens for adding and modifying informational entities; and
providing screens for adding and modifying reports.

5. A method for generating a graphical user interface comprising:
providing a database structure in accordance with claims 1, 2 and 3;
providing a table reports definition and setting a specific option, which defines that this information is to be presented to user as an interface;
providing a graphical presentation of each table report on a separate tab on the main page of a generic application;
providing a link for every record on a generated table presentation to an appropriate screen for viewing and updating data; and
providing a generic interface and algorithm for searching content and presenting it in a generic way.

6. A method for generating a slide presentation comprising:
providing a database structure in accordance with claims 1, 2 and 3;
automatically estimating content to be presented and splitting content on different slides, based on options stored in the tables report option and report option values;
generating a slide presentation based on stored content information in the tables entity and entity item, and definition of the informational subset stored in the tables report and report items.
